# EUROPÄISCHE PATENTSCHRIFT

(11) **EP 3 767 273 B1**
(45) Veröffentlichungstag und Bekanntmachung des Hinweises auf die Patenterteilung: **06.10.2021**
(21) Anmeldenummer: 20185297.7
(22) Anmeldetag: 10.07.2020
(51) Int. Cl.: G01N 1/12

(54) **PROBENEHMER UND VERFAHREN ZUM PROBENEHMEN**
SAMPLING DEVICE AND METHOD FOR SAMPLING
ÉCHANTILLONNEUR ET PROCÉDÉ D'ÉCHANTILLONNAGE

(30) Priorität: 17.07.2019 DE 102019004951
(43) Veröffentlichungstag der Anmeldung: 20.01.2021
(73) Patentinhaber: Bürkle GmbH, 79415 Bad Bellingen (DE)
(72) Erfinder: Nasdala, Björn, 79585 Steinen (DE)
(74) Vertreter: Fischer & Konnerth

(56) Entgegenhaltungen:
- WO-A1-2013/006414
- DE-A1- 4 304 816
- SE-B- 452 061
- US-A- 4 580 454

## Beschreibung

Die vorliegende Erfindung betrifft einen Probenehmer und ein Verfahren zum Probenehmen.

Es sind Vorrichtungen mit gegeneinander verdrehbaren konzentrischen Röhren zur Probenahme von Pulver, Granulat und Schüttgütern verschiedener Korngrößen und Materialien sowie auch Flüssigkeiten bekannt. Hierbei zeigen sich verschiedentlich Nachteile, wie z. B. aufgrund enger Spaltmaße zwischen den Röhren ein Verkanten und Verklemmen von Schüttgütern diverser Korngrößen zwischen Innen- und Außenrohr. Dies kann zu mechanischen Funktionsproblemen führen, wobei Gegendrehung der Röhren nicht mehr möglich ist bis zum totalen Ausfall der Vorrichtung, wenn sich beispielsweise die Probenkammer nicht mehr schließen lässt und das zu beprobende Material aus der Vorrichtung, dem Probenehmer herausfließt.

Die bekannten Probenehmer bedingen in der Regel eine schwierige und zeitintensive Montage, insbesondere aufgrund der engen Toleranzen zwischen Innen- und Außenrohr. Daneben sind kostenintensive Fertigungsschritte wie Schleifen und Polieren erforderlich. Die bekannten Probenehmer haben oft auch den Nachteil, dass sie zu kleine Kammern haben, sodass die Probemengen zu gering sind. Außerdem sind sie schwer zu reinigen.

Die WO 2013/006414 A1 beschreibt eine Materialsammelvorrichtung und Verfahren zur Verwendung solcher Vorrichtungen, welche eine Dreheinrichtung, einen Schneckenbohrer und einen Probenbehälter aufweisen. Der Schneckenbohrer ist mit der Dreheinrichtung verbunden. Ein Probenbehälterrohr ist angeordnet zur Aufnahme des Schneckenbohrers.

Aus der US 4,580,454 ist eine Vorrichtung zum Sammeln von flüssigen Inhalten aus einem Behälter bekannt, wobei die Vorrichtung ein längliches an einem Ende geöffnetes Rohr aufweist und an seinem anderen Ende eine Kappe mit einem Luftkanal versehen ist. Durch das Rohr hindurch erstreckt sich eine Betriebsstange mit einem Verschluss an einem Ende und einem Ventil zwischen seinen Enden. Mittels eines mit der Betriebsstange verbundenen Handgriffs kann die Betriebsstange zwischen gegenüberliegenden Enden liegenden Positionen des Rohrs bewegt werden, in welchen es durch den Verschluss und das Ventil abgedichtet ist.

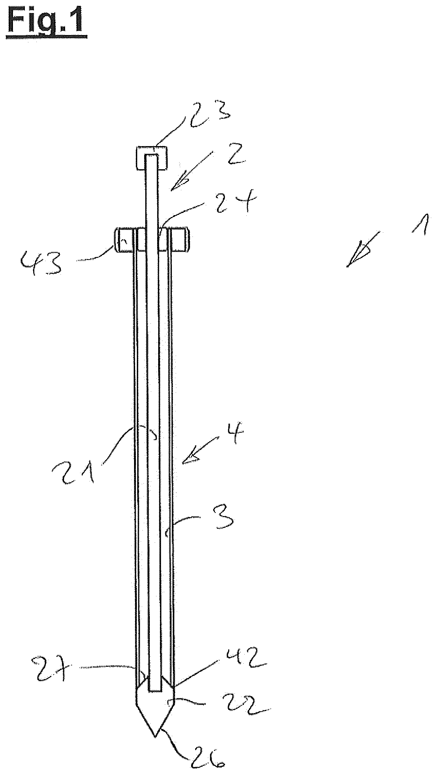

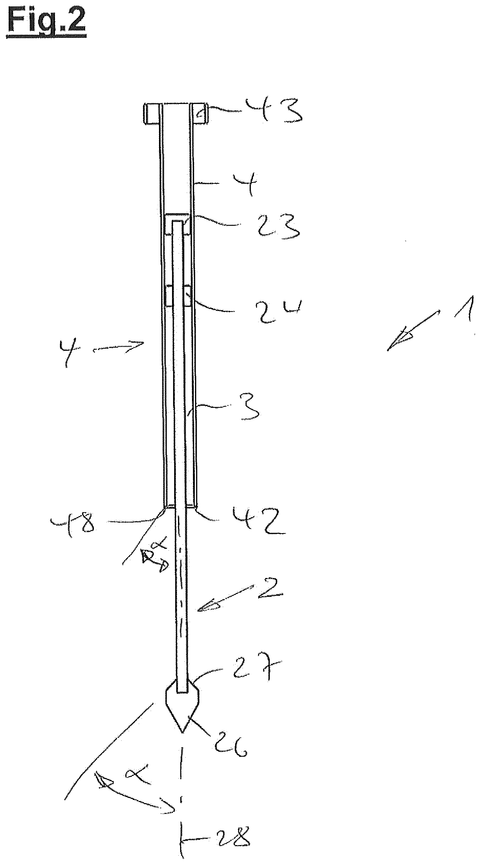

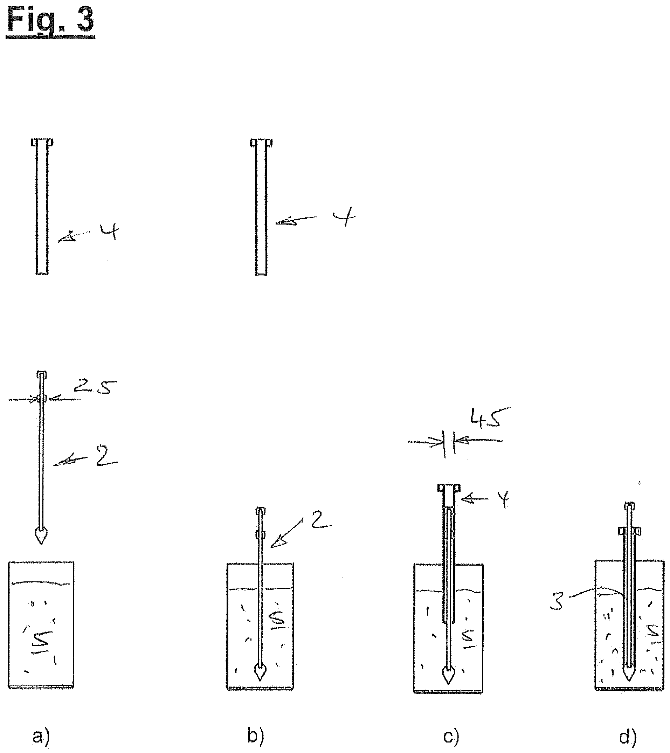

Aus der US 6,393,926 B1 ist eine Vorrichtung zum Aufnehmen von losem Gut bekannt, in deren Spitze eine kleine Kammer zur Aufnahme von losem Gut angeordnet ist. Eine Probenahme mit dieser Vorrichtung geht wie folgt vor sich. Die gesamte Vorrichtung wird in unter Kraft einer Spiralfeder geschlossenem Zustand (Fig. 2 und 3) in das Probegut einschoben. Um die Kammer gegenüber dem losen Gut zur Aufnahme einer Probe desselben freizulegen, wird ein im Inneren eines länglichen Rohrkörpers begrenzt verschieblich angeordneter Schaft gegen die Kraft der Spiralfeder mit seiner Spitze aus dem Rohrkörper herausgeschoben (Fig.1), sodass eine geringe Menge des losen Probegutes in die Kammer gelangen kann. Danach wird der Federkraft nachgegeben, sodass sich der Schaft wieder in den Rohrkörper zurückbewegt und damit die Kammer schließt. Hierauf kann die Vorrichtung aus dem Probegut herausgenommen werden. Sehr nachteilig an dieser Vorrichtung ist die Möglichkeit der gegenseitigen Verklemmung von Schaft und Rohrkörper aufgrund sehr feinen Probegutes wie z. B. Metall- oder Glaspulver und dergl. im Spalt zwischen Schaft und Rohrkörper. Daneben kann mit dieser Vorrichtung nur eine sehr kleine Probemenge genommen werden, denn je größer deren Probekammer wäre, umso größer wäre die Gefahr der Verklemmung des Rohrkörpers gegen den Schaft. Auch ist mit der genannten Vorrichtung nur eine sog. Zielpunktprobe möglich. Allschicht- oder Mischproben zu nehmen ist mit der hier offenbarten Vorrichtung nicht möglich.

Eine im Prinzip hierzu ziemlich ähnlich arbeitende Vorrichtung ist unter dem Begriff "Microsampler" im "Bürkle Katalog 2020" der Fa. BÜRKLE GmbH, Bad Bellingen, Deutschland (www.buerkle.de) beschrieben. Auch diese Vorrichtung ist aus den oben genannten Gründen nur für sehr kleine Zielpunktproben und nicht für Allschicht- oder Mischproben zufriedenstellend geeignet und zeigt in der Anwendung Probleme aufgrund von eingedrungenem Probegut im Spaltmaß zwischen Schaft und Rohrkörper.

Der Erfindung liegt eine Aufgabe zugrunde, einen Probenehmer und ein Verfahren zum Probenehmen vorzuschlagen, bei welchen die aus dem Stand der Technik bekannten Nachteile vermieden oder wenigstens stark vermindert werden.

Die Aufgabe wird zunächst gelöst mit einem Probenehmer gemäß Anspruch 1, nämlich einem

Probenehmer, welcher folgende Merkmale aufweist:
a) einen Kernbohrer mit einem Bohrerschaft, mit einem an einem ersten Ende des Bohrerschafts angeordneten Bohrkopf, mit einem an einem zweiten Ende des Bohrerschafts angeordneten Griff und mit einem zwischen den beiden Enden des Bohrerschafts in einem vorbestimmten Abstand zum Griff angeordneten Zentrierring, der einen Außendurchmesser hat,
b) ein Bohrrohr mit einer an einem ersten Ende des Bohrrohrs angeordneten Bohrkrone, mit einem an einem zweiten Ende des Bohrrohrs angeordneten Griff, wobei das Bohrrohr einen Innendurchmesser hat, der dem Außendurchmesser des Zentrierrings entspricht,
   dadurch gekennzeichnet, dass
c) der Griff des Kernbohrers und der Zentrierring gleiche Außendurchmesser haben.

Der erfindungsgemäße Probenehmer hat den Vorteil, dass er zweiteilig ausgebildet ist und in zwei voneinander getrennten Schritten in das Probemedium oder Probegut eingebracht werden kann, ohne dass sich Verklemmungen ergeben können. Vorteilhafterweise können mit dem erfindungsgemäßen Probenehmer auch größere Probemengen sowie sog. Allschicht- und Mischproben genommen werden, wobei erfindungsgemäß vorteilhafterweise eine einfach zu erreichende Parallelführung von Kernbohrer und Bohrrohr zueinander möglich wird.

In einer vorteilhaften Ausbildung der Erfindung ist der Probenehmer dadurch gekennzeichnet, dass der Bohrkopf eine sich zum ersten Ende hin, insbesondere konisch, verjüngende Bohrkopfspitze aufweist. Besonders bei dichteren Probemedien wird mit dieser Ausführung das Einbringen des Kernbohrers des Probenehmers wesentlich erleichtert.

In einer weiteren vorteilhaften Ausbildung der Erfindung ist der Probenehmer dadurch gekennzeichnet, dass der Bohrkopf eine sich zum zweiten Ende hin, insbesondere konisch, verjüngende Rückwand aufweist. Aufgrund der sich verjüngenden Rückwand ergibt sich beim Kontakt mit dem nach dem Kernbohrer eingeführten Bohrrohr eine Linienberührung, welche ein klares und einfaches Abschließen der sich hierbei zwischen Bohrrohr und Bohrerschaft des Kernbohrers ergebenden Probenkammer ermöglicht.

In noch einer weiteren vorteilhaften Ausbildung der Erfindung ist der Probenehmer dadurch gekennzeichnet, dass die Bohrkrone eine sich zum Innendurchmesser verjüngende, insbesondere mit sich radial nach außen erstreckenden Ausnehmungen versehene, Fase in Form einer Schneidkante aufweist. Diese erfindungsgemäße Ausbildung vereinfacht das Einbringen des Bohrrohrs in das Probemedium und verringert die hierfür erforderliche Kraft immens, da die erfindungsgemäß derart ausgebildete Bohrkrone wie eine Schneide wirkt.

In wieder einer anderen vorteilhaften Ausbildung der Erfindung ist der Probenehmer dadurch gekennzeichnet, dass die sich verjüngende Rückwand und / oder die sich verjüngende Fase unter einem Winkel von 45° zur Mittelachse des Bohrerschafts orientiert sind/ist. Je nach Probemedium ist ein flächiger Kontakt zwischen der Rückwand des Bohrkopfs und der Bohrkrone optimal. Es wurde in zahlreichen Versuchen überraschenderweise herausgefunden, dass der Winkel von 45° für die genannten konischen Verjüngungen die besten Ergebnisse gezeigt hat.

In wieder einer weiteren vorteilhaften Ausbildung der Erfindung ist der Probenehmer dadurch gekennzeichnet, dass der Zentrierring und / oder der Griff des Kernbohrers reifen-, kugel- oder zylinderförmig ausgebildet sind/ist. Je nach Zuordnung lässt ein leichtes "Einfädeln" des Bohrrohrs auf den Kernbohrer beim Überstülpen des Bohrrohrs erreichen.

In noch einer anderen vorteilhaften Ausbildung der Erfindung ist der Probenehmer dadurch gekennzeichnet, dass die Rückwand im Bereich ihrer Außenkante eine Dichtung, insbesondere O-Ring-Dichtung, aufweist. Diese erfindungsgemäße Ausbildung des Probenehmers ist insbesondere für flüssige Probemedien bis zu Viskosenmedien von Vorteil, da damit eine fluiddichte Kammer für die Probe geschaffen wird.

In noch einer weiteren vorteilhaften Ausbildung der Erfindung ist der Probenehmer dadurch gekennzeichnet, dass der Bohrkopf und / oder das Bohrrohr an ihrer Außenseite sich radial nach außen erstreckende, insbesondere schraubenförmige Bohrschaufeln aufweisen. Mit dieser Ausführung wird erfindungsgemäß das Einbohren des Probenehmers in feststoffliche Probemedien unterstützt.

In wieder einer anderen vorteilhaften Ausbildung der Erfindung ist der Probenehmer dadurch gekennzeichnet, dass der Bohrkopf und / oder das Bohrrohr Aufnahmen für eine Kurbel aufweisen. Es versteht sich von selbst, dass eine derartige Ausbildung des erfindungsgemäßen Probenehmers die Durchführung der Probenahme wesentlich erleichtert.

In wieder einer weiteren vorteilhaften Ausbildung der Erfindung ist der Probenehmer dadurch gekennzeichnet, dass das Bohrrohr wenigstens eine Füllstandsanzeige aufweist. Soll nicht die gesamte Länge des Probenehmers in das Probemedium eingeführt werden, also eine kleinere Probemenge genommen werden, ist eine Füllstandsanzeige von großem Vorteil. Diese kann ein Sichtfenster in der Wand des Bohrrohrs oder ein Maßstab an der Außenseite des Bohrrohrs sein.

In noch einer anderen vorteilhaften Ausbildung der Erfindung ist der Probenehmer dadurch gekennzeichnet, dass er eine Einrichtung zum Verriegeln von Kernbohrer und Bohrrohr gegeneinander aufweist. Mit dieser Ausführung kann der Probenehmer nach der Probenahme mit der innenliegenden Probe für eine weitere Verwendung vorteilhafterweise geschlossen zu halten.

In einer weiteren vorteilhaften Ausbildung der Erfindung ist der Probenehmer dadurch gekennzeichnet, dass der Kernbohrer und / oder das Bohrrohr mit einem, insbesondere elektrisch betriebenen Drehantrieb koppelbar ausgebildet sind. Für schwere oder stark verdichtete Probemedien wir z. B. Kies ist eine derartige Ausbildung eine große Erleichterung für das Bedienungspersonal beim Nehmen von Proben.

In noch einer anderen vorteilhaften Ausbildung der Erfindung ist der Probenehmer dadurch gekennzeichnet, dass der Zentrierring des Kernbohrers wenigstens eine sich vom Umfang radial nach innen erstreckende Ausnehmung und das Bohrrohr an seinem oberen Ende wenigstens einen sich vom Umfang radial nach innen erstreckenden Vorsprung aufweist. Diese Ausführungsform bietet den Vorteil, dass das Bohrrohr nach geringfügigem Verdrehen mit seinem wenigstens einen Vorsprung auf dem Zentrierring abgesetzt und quasi "geparkt" werden kann. Dies ermöglicht ein beruhigtes Einführen des erfindungsgemäßen Probenehmers in eine Flüssigkeit.

In wieder einer weiteren vorteilhaften Ausbildung der Erfindung ist der Probenehmer dadurch gekennzeichnet, dass der Kernbohrer zwischen Zentrierring und Bohrkopf eine Lochscheibe aufweist. Hierdurch lässt sich das Bohrrohr leichter am Kernbohrer entlang führen.

In wieder einer anderen vorteilhaften Ausbildung der Erfindung ist der Probenehmer dadurch gekennzeichnet, dass das Bohrrohr einen an seiner Außenfläche vorzugsweise klemmend angeordneten, insbesondere daran längs verschiebbaren Abstreiferring aufweist. Mit dieser Ausgestaltung wird die Entleerung der Probekammer des Probenehmers vereinfacht

In wieder einer weiteren vorteilhaften Ausbildung der Erfindung ist der Probenehmer dadurch gekennzeichnet, dass der Kernbohrer und das Bohrrohr im Bereich ihrer oberen Enden Ausnehmungen zur lösbaren Verbindung mit Nabenelementen der Kurbel aufweisen. Dadurch wird eine Probenahme wesentlich erleichtert, da bei Einsatz einer Kurbel das Einbohrdrehmoment vervielfacht werden kann.

In weiteren vorteilhaften Weiterbildung der Erfindung ist der Probenehmer dadurch gekennzeichnet, dass die Ausnehmung des Bohrrohrs in Form einer Kulissenbahn eines Bajonettverschlusses ausgebildet ist, in welche wenigstens ein Kurbelarm der Kurbel eingeführt werden kann, Diese Ausgestaltung ermöglicht eine einfache und elegante schnell schließbare und schnell lösbare Kopplung von Kurbel und Bohrrohr und beschleunigt den Probenahmevorgang.

In wieder einer anderen vorteilhaften Ausbildung der Erfindung ist der Probenehmer dadurch gekennzeichnet, dass die Ausnehmung des Kernbohrers als wenigstens eine Bohrung ausgebildet ist, in welche wenigstens ein Federelement des Nabenelements des Kernbohrers eingeführt werden kann. Hiermit ist nun eine noch einmal verbesserte Variante des erfindungsgemäßen Probenehmers geschaffen, da ein und dieselbe Kurbel für Kernbohrer und Bohrrohr zur Verfügung steht. Zum Wechsel der Kurbel von Kernbohrer zu Bohrrohr muss dieser nur noch um 180 Grad gedreht werden, damit die gewünschte Nabenseite zur Koppelung von Kurbel mit dem entsprechenden Element des Probenehmers zeigt. Dies vereinfacht den Probenahmevorgang weiter. Erfindungsgemäß wird mit der Kurbel nur *ein* Kombinationswerkzeug eingesetzt, wo vorher zwei Werkzeuge erforderlich waren.

Die Aufgabe wird auch gelöst mit einem Verfahren zum Probenehmen gemäß Anspruch 20, nämlich einem

Verfahren zum Probenehmen mit einem Probenehmer nach einem der Ansprüche 1 bis 19, gekennzeichnet durch folgende Schritte:
a) Einführen des Kernbohrers in ein zu beprobendes Medium bis zur gewünschten Tiefe durch Eindrücken, Einbohren oder Eintauchen,
b) Überstülpen des Bohrrohrs über den Kernbohrer und Eindrücken, Einbohren oder Eintauchen in das Medium, bis die Bohrkrone mit dem Bohrkopf in Kontakt kommt,
c) gemeinsames Herausziehen des Kernbohrers zusammen mit dem Bohrrohr.

Die Vorteile dieses Verfahrens liegen auf der Hand. Die Probenahme kann schnell, sauber, einfach, genau und störungsfrei durchgeführt werden. Zunächst wird der Kernbohrer in das Probemedium eingeführt. Dann erfolgt das Einführen des Bohrrohrs und damit die eigentliche Probenahme. (Siehe auch Beschreibung zu Fig 3. Hier ist auch gezeigt, dass sich der Griff des Kernbohrers und derZentrierring während der Probenahme außerhalb des Probemediums befinden.) Da das Bohrrohr erst im allerletzten Moment vor dem Verschließen der Vorrichtung durch Aufsetzen auf dem Bohrkopf an diesem anstößt, findet keinerlei Gleitkontakt zwischen Kernbohrer und Bohrrohr statt. Es kann damit also auch kein Probemedium wie z. B. Glas- oder Metallpulver zwischen Kernbohrer und Bohrrohr gelangen und diese gegeneinander verklemmen, wie dies bei den aus dem Stand der Technik bekannten Vorrichtungen bekannt ist. Es kann kein Verklemmen einzelner Teilchen des Probemediums geben. Es ist keine Vormontage vor einer Probenahme erforderlich. Die Reinigung des erfindungsgemäßen Probenehmers ist einfach und schnell zu bewerkstelligen. Die aus dem Stand der Technik bekannten Nachteile werden überwunden.

In einer vorteilhaften Ausbildung ist das erfindungsgemäße Verfahren durch folgende weitere Schritte gekennzeichnet:
d) Verbringen des Kernbohrers zusammen mit dem Bohrrohr über einen Auffangbehälter,
e) Abziehen des Bohrrohrs vom Kernbohrer.

Damit kann der Probenehmer nach Probenahme schnell und unkompliziert entleert werden.

Die Aufgabe wird auch gelöst mit einem Verfahren zum Probenehmen gemäß Anspruch 22, nämlich einem Verfahren zum Probenehmen mit einem Probenehmer nach einem der Ansprüche 8, 14, 15 oder 16, welches gekennzeichnet ist durch folgende Schritte:
a) Überstülpen des Bohrrohrs über den Kernbohrer, bis die Bohrkrone mit dem Bohrkopf in Kontakt kommt, und Eintauchen des geschlossenen Probenehmers in das Probemedium bis in eine gewünschte Tiefe,
b) Öffnen der Probekammer des Probenehmers durch Verschieben des Bohrrohrs gegen den Kernbohrer,
c) Einströmen lassen einer vorbestimmten Menge des zu beprobenden Mediums,
d) Schließen der Probekammer des Probenehmers durch Verschieben des Bohrrohrs gegen den Kernbohrer, bis die Bohrkrone mit dem Bohrkopf in Kontakt kommt,
e) gemeinsames Herausziehen des Kernbohrers zusammen mit dem Bohrrohr.

Dieses erfindungsgemäße Verfahren ist insbesondere beim Probenehmen von flüssigen Probemedien von Vorteil, wenn eine sogenannte Zielpunktprobe einer Flüssigkeit zu nehmen ist. Der Probenehmer wird mit geschlossener Probekammer bis zur gewünschten Tiefe in die Flüssigkeit eingeführt. Dann wird das Bohrrohr geringfügig gegen den Kernbohrer angehoben. Die Flüssigkeit kann einströmen. Zur Beendigung der Probenahme lässt man das Bohrrohr wieder ab - hier kann die Schwerkraft unterstützend wirken - und zieht den nun wieder geschlossenen Probenehmer aus der Flüssigkeit heraus. Die Probe ist genommen.

In einer vorteilhaften Ausbildung ist das eben beschriebene erfindungsgemäße Verfahren durch folgende weitere Schritte gekennzeichnet:
f) gemeinsames Verbringen des Kernbohrers zusammen mit dem Bohrrohr über einen Auffangbehälter,
g) Abstützen des Probenehmers mit dem Abstreiferring an einem Probenbehälter,
h) Abziehen des Bohrrohrs gegenüber dem Kernbohrer und Entleeren des Probenehmers.

Dieses erfindungsgemäße Verfahren ist insbesondere beim Probenehmen von Pulvern vorteilhaft. Das Verfahren mit dem Probenehmer hat die Besonderheit, dass dieser einen Abstreiferring hat, wodurch ein staubfreies Abfüllen der Probe in ein Aufnahmegefäß ermöglicht wird. Der Abstreiferring ist auf dem Bohrrohr verschiebbar angeordnet, kann also mit einer einstellbaren Tiefe in das Aufnahmegefäß eintauchen. Er kann auch ein mit einem Gewinde des Aufnahmegefäßes korrespondierendes Gewinde aufweisen.

In einer anderen vorteilhaften Ausbildung der Erfindung ist der Probenehmer dadurch gekennzeichnet, dass der Kernbohrer und das Bohrrohr voneinander unabhängige Bauteile sind. Die Bauteile Kernbohrer und das Bohrrohr werden getrennt gehandhabt und sind sehr einfach zu reinigen. Damit ist vorteilhafterweise auch ein separates Einführen der beiden Bauteile in das beprobende Medium möglich, wobei ein Verklemmen gegeneinander nicht stattfinden kann.

Um zu zeigen, wie die Erfindung ausgeführt werden kann und zum leichteren Verständnis wird diese im Folgenden anhand von Ausführungsbeispielen mittels einer Zeichnung kurz beschrieben.
- Fig. 1: zeigt stark schematisiert und vereinfacht die Darstellung eines Probenehmers gemäß der Erfindung in zusammengeschobenem Zustand im Teilschnitt.
- Fig. 2: zeigt stark schematisiert und vereinfacht die Darstellung eines Probenehmers gemäß der Erfindung in teilweise auseinander gezogenem Zustand im Teilschnitt.
- Fig. 3: zeigt stark schematisiert und vereinfacht in Schritten a bis d das Einbringen eines Probenehmers gemäß der Erfindung in ein zu beprobendes Medium mit Probenahme.
- Fig. 4: zeigt stark schematisiert und vereinfacht in Schritten e bis g das Herausnehmen des Probenehmers nach Fig. 3 aus dem zu beprobenden Medium mit Probeabgabe.
- Fig. 5: zeigt stark schematisiert und vereinfacht ein weiteres Ausführungsbeispiel eines Probenehmers zur Beprobung von Flüssigkeiten in perspektivischer Ansicht.
- Fig. 6: zeigt stark schematisiert und vereinfacht die Darstellung eines Kernbohrers eines weiteren Probenehmers gemäß der Erfindung.
- Fig. 7: zeigt stark schematisiert und vereinfacht das obere Ende eines Bohrrohrs zur Kombination mit dem Kernbohrer nach Fig. 6.
- Fig. 8: zeigt stark schematisiert und vereinfacht das obere Ende eines über den Kernbohrer gestülpten Bohrrohrs nach Fig. 6.
- Fig. 9: zeigt eine vollständige Darstellung des geöffneten Probenehmers in der Anordnung nach Fig. 6, stark verkleinert, in perspektivischer Ansicht.
- Fig. 10: zeigt eine vollständige Darstellung des geschlossenen Probenehmers (mit genommener Probe) in der Anordnung nach Fig. 6, stark verkleinert, in perspektivischer Ansicht.
- Fig. 11: zeigt stark schematisiert und vereinfacht ein weiteres Ausführungsbeispiel eines erfindungsgemäßen Probenehmers, vorzugsweise für die Probenahme von pulverförmigen Probemedien.
- Fig. 12: zeigt schematisch eine beispielhafte Kopplung einer Kurbel mit einem Kernbohrer, im Teilschnitt.
- Fig. 13: zeigt schematisch die Kopplung nach Fig. 12 nach Trennung der beiden Komponenten, in Perspektivansicht.
- Fig. 14: zeigt schematisch eine Situation, in welcher ein Bohrrohr über den Kernbohrer gestülpt und die Kurbel bereits um 180° gedreht ist.
- Fig. 15: zeigt schematisch die Anordnung nach Fig. 14 nach Verbindung der Kurbel mit dem Bohrrohr zur Übertragung einer Drehbewegung, in Perspektivansicht.
- Fig. 16: zeigt schematisch eine Situation, in welcher das Bohrrohr solange in das Medium eingetrieben worden ist, bis der Kernbohrer in den Innenbereich der Kurbel vorgedrungen ist, in Schnittansicht.
- Fig. 17: zeigt schematisch die Anordnung nach Fig. 16 nachdem die Kurbel vom Bohrrohr gelöst, erneut um 180° gedreht und wieder auf dem Kernbohrer mittels Feder befestigt ist, in Schnittansicht.

Fig. 1 zeigt einen Probenehmer 1 mit einem im Wesentlichen runden Kernbohrer 2 und ein über diesen gestülptes im Wesentlichen rundes Bohrrohr 4. Der Kernbohrer 2 hat an seinem ersten Ende (in Fig. 1 unten) einen Bohrkopf 22 mit einer Bohrkopfspitze 26, mit welcher er in das (hier nicht gezeigte) zu beprobende Medium (kurz Probemedium 5) eintauchen soll. An seinem zweiten Ende (in Fig. 1 oben) weist der Kernbohrer 2 einen Griff 23 auf. Die Bohrkopfspitze 26 (nach unten gerichtet) kann variabel an das jeweilige Probemedium 5 angepasst werden. Zwischen Griff 23 und Bohrkopf 22 erstreckt sich ein Bohrerschaft 21. Auf den Bohrerschaft 21 aufgeschoben ist das Bohrrohr 4 zu erkennen, welches oben einen Griff 43 hat und an dessen unterem Ende eine Bohrkrone 42 angeordnet ist, welche in der gezeigten Position - der geschlossenen Stellung des Probenehmers 1 - in Kontakt mit einer Rückwand 27 des Bohrkopfs 22 in Kontakt steht. Zwischen Bohrerschaft 21 und Bohrrohr 4 befindet sich eine rohrhülsenförmige Probekammer 3. Das Bohrrohr 4 wird durch einen am Bohrerschaft 21 angeordneten Zentrierring 24 am Kernbohrer 2 zentriert. Der Zentrierring 24 dient auch zur Abstützung des Bohrrohrs 4 sowie zur Bohrtiefenanzeige.

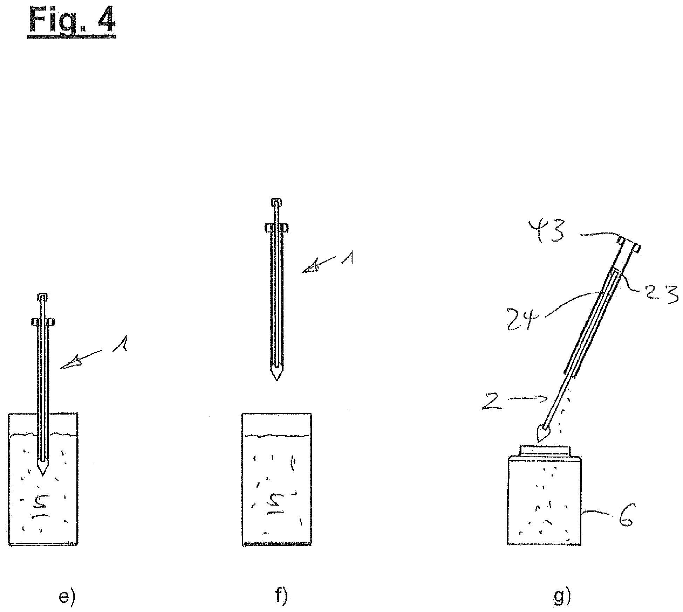

In Fig. 2 ist der Probenehmer 1 von Fig. 1 gezeigt, hier jedoch in teilweise auseinandergezogener Position. Hierbei ist die Bohrkrone 42 besser zu erkennen. Die Probekammer 3 ist unten offen. Etwa darin befindliches Probemedium könnte in dieser Stellung auslaufen (Fig. 4). Die Bohrkrone 42 ist mit einer Fase 48 versehen, die beispielhaft zur Mittelachse 28 einen Winkel α von 45° einschließt. Sie korrespondiert mit der Lage der Rückwand 27, welche bei diesem Ausführungsbeispiel ebenfalls zur Mittelachse 28 einen Winkel α von 45° einschließt. Die Fase 48 dient auch dem leichteren Einbohren in das Probemedium 5 sowie zur Zentrierung auf dem Kernbohrer 2. Bei feinkörnigem Probemedium lässt sich ein exakteres Verschließen der beiden Komponenten erreichen. Die Griffe 23 und 43 können mit einer Struktur versehen sein, um das Eindrehen zu vereinfachen.

Zu beachten ist, dass der in den Fig. 1 und 2 gezeigte Probenehmer eine Weiterbildung des in den Fig. 3 und Fig. 4 Probenehmers darstellt, welcher der Grundform gemäß Anspruch 1 entspricht.

Fig. 3 und Fig. 4 zeigen den Einsatz eines Ausführungsbeispiels eines erfindungsgemäßen Probenehmers 1 in mehreren Schritten. Bei Schritt a sind Kernbohrer 2 und Bohrrohr 4 übereinander angeordnet oberhalb eines mit Probemedium 5 gefüllten Behälters vorbereitet. Bei Schritt b ist der Kernbohrer 2 in das Probemedium 5 eingebracht. Das Einbringen kann je nach Beschaffenheit des Probemediums durch einfaches Drücken, Drehen, Stoßen oder auch Hämmern in das Probemedium von statten gehen. Bei schweren, kompakten oder stark verdichteten Probemedien können hier an der Außenwand von Bohrrohr und / oder Bohrkopf angebrachte (nicht gezeigte) schraubenförmige Bohrschaufeln das Eindrehen unterstützen.

Bei Schritt c ist das Bohrrohr 4 bereits über den Kernbohrer 2 gestülpt und "taucht" (mit Durchführung ähnlicher Aktionen wie beim Einbringen des Kernbohrers 2) ebenfalls in das Probemedium ein. Hierbei ist zu erkennen, dass sich in der Probekammer 3 bereits ein Teil des Probemediums 5 sammelt. Gut nachvollziehbar ist der Vorteil, wenn das Bohrrohr 4 einen Innendurchmesser 45 hat, der dem Außendurchmesser 25 des vorteilhafterweise zylindrischen Zentrierrings 24 entspricht. Damit ist eine klare Positionierung des Bohrrohrs 4 zum Kernbohrer 2 und damit eine definierte Größe der Probekammer 3 gegeben, insbesondere, wenn der Außendurchmesser des Griffs 23 des Kernbohrer 2 ebenfalls dem Innendurchmesser 45 des Bohrrohrs 4 entspricht.

In Schritt d ist der Probenehmer 1 geschlossen. Die Probe ist genommen. Sie befindet sich in der Probekammer 3.

Fig. 4 zeigt in Schritt e den Zustand nach bereits begonnenem Herausziehen des Probenehmers 1 aus dem Probemedium 5. Es ist von Vorteil, den nun geschlossenen Probenehmer an seinem Griff 23 zu nehmen und aus dem Probemedium heraus zu ziehen. Das Eigengewicht des Bohrrohrs 4 hilft hier, den Probenehmer geschlossen zu halten.

Nach vollständigem Herausziehen des Kernbohrers 2 zusammen mit dem Bohrrohr 4 (Schritt f), also des geschlossenen Probenehmers 1 wird dieser über einen Auffangbehälter 6 gebracht. Durch Abziehen des Bohrrohrs 4 vom Kernbohrer 2 (Schritt g) wird der Probenehmer 1 entleert.

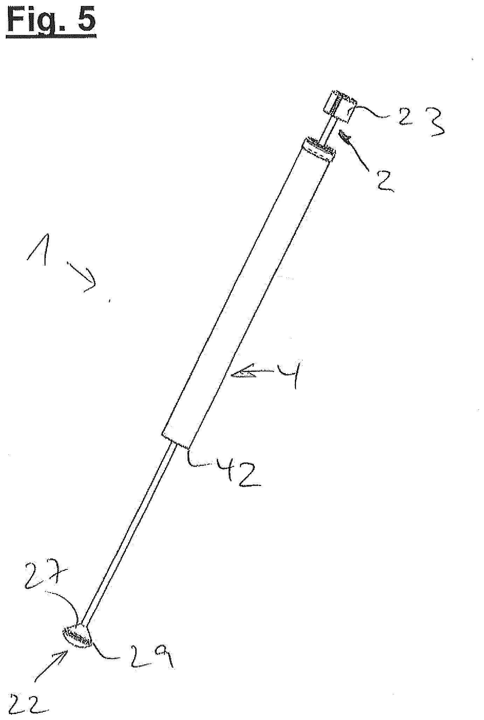

In Fig. 5 ist schließlich ein Ausführungsbeispiel eines Probenehmers 1 zur Beprobung von Flüssigkeiten gezeigt. Das Bohrrohr 4 ist nach oben gezogen. Wird es nach unten auf den Bohrkopf 22 geschoben, so kommt es mit seiner Bohrkrone 42 in Kontakt mit einer an der Rückwand 27 im Bereich ihrer Außenkante angeordneten Dichtung 29, welche vorzugsweise als O-Ring-Dichtung ausgebildet sein kann. Die Dichtung 29 ermöglicht einen dichten Verschluss von Bohrrohr 4 mit dem Bohrkopf 22 bzw. mit dem Kernbohrer 2, sodass keine Verluste des Probemediums zu besorgen sind.

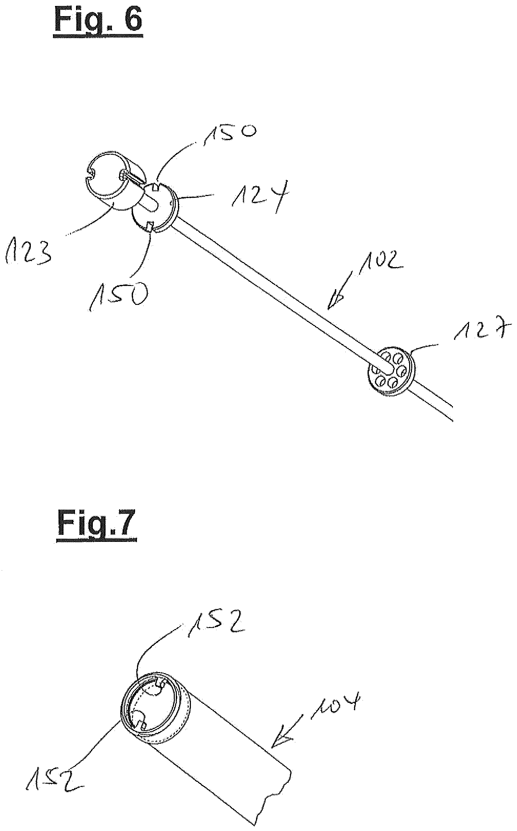

Fig. 6 zeigt einen Kernbohrer 102 eines weiteren Probenehmers gemäß der Erfindung, mit einem Zentrierring 124 mit zwei Ausnehmungen 150. Diese dienen der Passage von Vorsprüngen 152 (Fig. 7) eines zugehörigen Bohrrohrs 104 beim Überstülpen desselben auf den Kernbohrer 102 über den Griff 123. Dieser erfindungsgemäße Probenehmer ist insbesondere beim Probenehmen von Flüssigkeiten von Vorteil, wenn eine sogenannte Zielpunktprobe einer Flüssigkeit zu nehmen ist. Gut zu erkennen ist eine an dem Kernbohrer 102 angeordnete Lochscheibe 127 als Zentrierhilfe für das Bohrrohr 104.

Fig. 7 zeigt hierzu das obere Ende eines Bohrrohrs 104 zur Kombination mit dem Kernbohrer 102 nach Fig. 6, wie im Folgenden beschrieben werden wird.

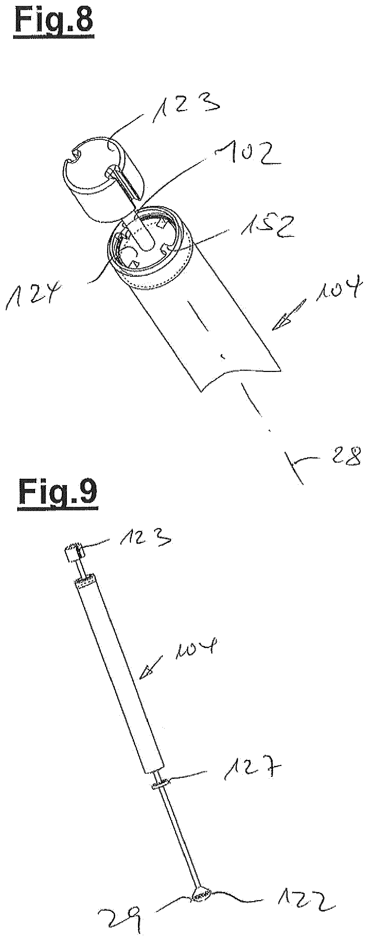

In der Darstellung gemäß Fig. 8 ist das Bohrrohr 104 über den Kernbohrer 102 gestülpt und um etwa 90 Grad um eine Mittelachse 28 gedreht, sodass die Vorsprünge 521 des Bohrrohrs 104 auf dem Zentrierring 124 aufliegen. Das Bohrrohr ist sozusagen in Vorbereitung einer Probenahme "geparkt".

Fig. 9 zeigt den geöffneten Probenehmer gegenüber Fig. 6 stark verkleinert, um die Anordnung des Bohrkopfs 122 mit Dichtung 29, Lochscheibe 127 am Kernbohrer 102 darzustellen, an dessen Zentrierring 124 (Fig.8) das Bohrrohr 104 geparkt ist.

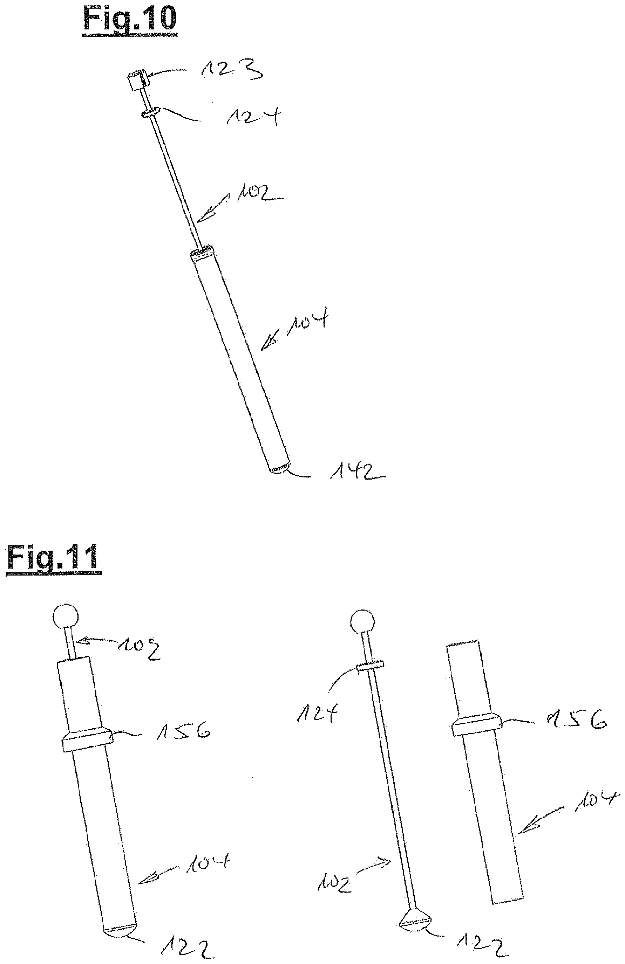

In der Situation nach Fig. 10 ist der Probenehmer nach Probenahme durch Absenken des Bohrrohrs 104 gezeigt. Er kann nun aus dem Probemedium herausgenommen, die Probe kann versorgt werden.

Fig. 11 zeigt einen Probenehmer, vorzugsweise für die Probenahme von Pulver, mit einem etwas kürzeren Kernbohrer 102 und Bohrrohr 104. Hervorzuheben ist ein Abstreiferring 156, durch welchen ein staubfreies Abfüllen ermöglicht wird. Der Abstreiferring 156 ist auf dem Bohrrohr 104 verschiebbar angeordnet. Der Probenehmer soll nach einer Probenahme mit seinem Bohrkopf 122 in ein (nicht gezeigtes) Aufnahmegefäß eingeführt werden, bis der Abstreiferring 156 an der Öffnung des Aufnahmegefäßes möglichst staubdicht anliegt. Dann kann der Kernbohrer 102 gegen das Bohrrohr 104 (nach unten) bewegt und der Probenehmer in das Aufnahmegefäß entleert werden.

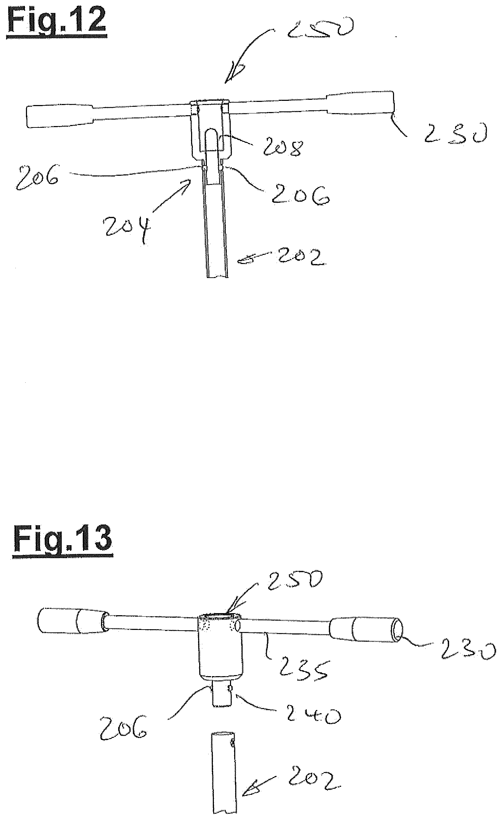

In den Fig. 12 bis 17 wird der erfindungsgemäße Einsatz einer Kurbel 230 bei einer beispielhaft beschriebenen Probenahme erläutert. Fig. 12 zeigt die Kurbel 230 mit einem im Wesentlichen runden Nabenelement 240, welches in einen Kernbohrer 202 eintaucht und dort mittels eines Federelements 208, dessen Zapfen 206 in Bohrungen 209 des Kernbohrers 202 ruhen, drehfest fixiert ist. Der Kernbohrer 202 kann mit Hilfe der Kurbel 230 in das Probemedium eingedreht werden.

Fig. 13 soll das Stadium der Probenahme zeigen, in welchem der Kernbohrer 202 nach Eindrehen in seiner Zielposition im Probemedium angekommen ist und die Kurbel 230 durch radiales Eindrücken der Zapfen 206 bereits vom Kernbohrer 202 gelöst ist.

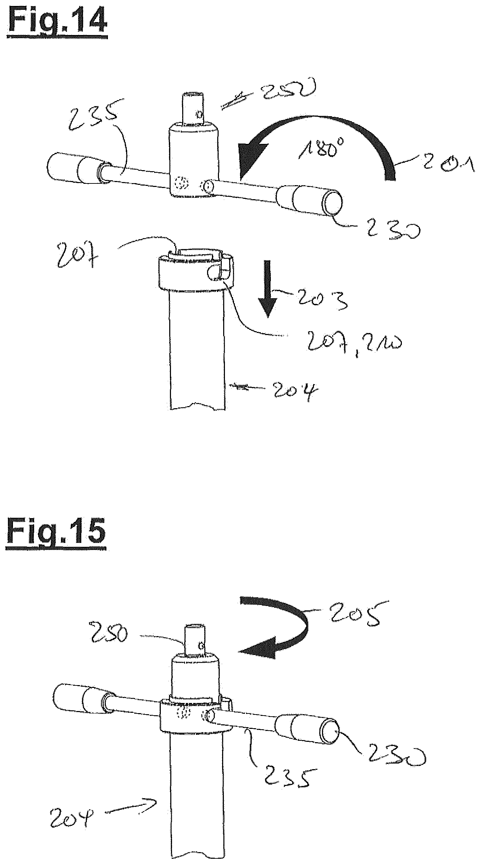

In der Darstellung nach Fig. 14 ist das Bohrrohr 204 bereits über den (hier nicht sichtbaren) Kernbohrer 202 gestülpt. Die Kurbel 230 ist gemäß Pfeil 201 um 180 Grad gedreht und soll gemäß Pfeil 203 abgesenkt und auf das Bohrrohr 204 aufgesetzt werden. Man erkennt eine Ausnehmung 210, beispielhaft in Form einer Kulissenbahn 207, in welche ein Kurbelarm 235 der Kurbel 230 eingeführt werden soll.

Dies ist gemäß Fig. 15 bereits geschehen. Mit der an dem Bohrrohr 204 befestigten Kurbel 230 kann nun durch Drehen derselben das Bohrrohr 204 gemäß dem Drehpfeil 205 in das Prüfmedium eingedreht werden.

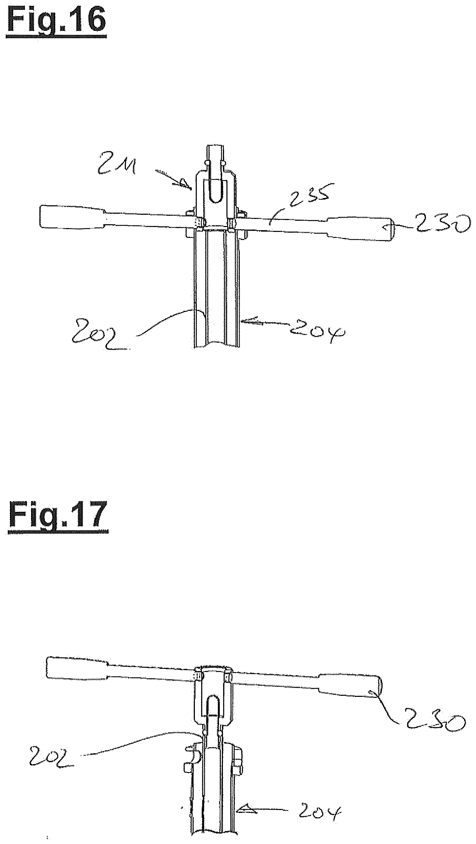

Schließlich ist, wie in Fig. 16 gezeigt ist, das über den Kernbohrer 202 gestülpte Bohrrohr 204 solange in das (nicht gezeigte) Prüfmedium eingetrieben worden, bis der das obere Ende des Kernbohrers 202 in den Innenbereich der Kurbel 230 vorgedrungen ist, siehe Pfeil 211. Die Probe ist genommen. Die Probekammer ist geschlossen.

Die Kurbel 230 wird vom Bohrrohr 204 radial und axial aus der Kulissenbahn entfernt und erneut, entgegen dem Pfeil 201 (Fig. 14), um 180° gedreht. Im Anschluss daran wird die Kurbel 230 wieder auf dem Kernbohrer 202 mittels Federelement 208 (Zapfen 206) befestigt. Diese Situation ist in Fig. 17 dargestellt. Schließlich wird der Kernbohrer 202, der jetzt natürlich das Bohrrohr 204 mit sich trägt, mit Hilfe der Kurbel 230 aus dem Probemedium herausgezogen. Durch das Eigengewicht des Bohrrohres 204 wird hierbei der Probenehmer geschlossen gehalten.

## Patentansprüche

1. Probenehmer (1), welcher folgende Merkmale aufweist:
a) einen Kernbohrer (2) mit einem Bohrerschaft (21), mit einem an einem ersten Ende des Bohrerschafts (21) angeordneten Bohrkopf (22), mit einem an einem zweiten Ende des Bohrerschafts (21) angeordneten Griff (23) und mit einem zwischen den beiden Enden des Bohrerschafts (21) in einem vorbestimmten Abstand zum Griff (23) angeordneten Zentrierring (24), der einen Außendurchmesser (25) hat,
b) ein Bohrrohr (4) mit einer an einem ersten Ende des Bohrrohrs (4) angeordneten Bohrkrone (42), mit einem an einem zweiten Ende des Bohrrohrs (4) angeordneten Griff (43), wobei das Bohrrohr (4) einen Innendurchmesser (45) hat, der dem Außendurchmesser (25) des Zentrierrings (24) entspricht,
**dadurch gekennzeichnet, dass**
c) der Griff (23) des Kernbohrers (2) und der Zentrierring (24) gleiche Außendurchmesser haben.

2. Probenehmer nach Anspruch 1, **dadurch gekennzeichnet, dass** der Bohrkopf (22) eine sich zum ersten Ende hin, insbesondere konisch, verjüngende Bohrkopfspitze (26) aufweist.

3. Probenehmer nach Anspruch 1 oder 2, **dadurch gekennzeichnet, dass** der Bohrkopf (22) eine sich zum zweiten Ende hin, insbesondere konisch, verjüngende Rückwand (27) aufweist.

4. Probenehmer nach Anspruch 1, 2 oder 3, **dadurch gekennzeichnet, dass** die Bohrkrone (42) eine sich zum Innendurchmesser (45) verjüngende, insbesondere mit sich radial nach außen erstreckenden Ausnehmungen versehene, Fase (48) in Form einer Schneidkante aufweist.

5. Probenehmer nach Anspruch 3 oder 4, **dadurch gekennzeichnet, dass** die sich verjüngende Rückwand (27) und / oder die sich verjüngende Fase (48) unter einem Winkel α von 45° zur Mittelachse (28) des Bohrerschafts (21) orientiert sind/ist.

6. Probenehmer nach einem der vorhergehenden Ansprüche, **dadurch gekennzeichnet, dass** der Zentrierring (24) und / oder der Griff (23) des Kernbohrers (2) reifen-, kugel- oder zylinderförmig ausgebildet sind/ist.

7. Probenehmer nach einem der vorhergehenden Ansprüche, **dadurch gekennzeichnet, dass** die Rückwand (27) im Bereich ihrer Außenkante eine Dichtung (29), insbesondere O-Ring-Dichtung, aufweist.

8. Probenehmer nach einem der vorhergehenden Ansprüche, **dadurch gekennzeichnet, dass** der Bohrkopf (22) und / oder das Bohrrohr (4) an ihrer Außenseite sich radial nach außen erstreckende, insbesondere schraubenförmige Bohrschaufeln aufweisen.

9. Probenehmer nach einem der vorhergehenden Ansprüche, **dadurch gekennzeichnet, dass** der Kernbohrer (2) und / oder das Bohrrohr (4) Aufnahmen für eine Kurbel aufweisen.

10. Probenehmer nach einem der vorhergehenden Ansprüche, **dadurch gekennzeichnet, dass** das Bohrrohr (4) wenigstens eine Füllstandsanzeige aufweist.

11. Probenehmer nach einem der vorhergehenden Ansprüche, **dadurch gekennzeichnet, dass** er eine Einrichtung zum Verriegeln von Kernbohrer (2) und Bohrrohr (4) gegeneinander aufweist.

12. Probenehmer nach einem der vorhergehenden Ansprüche, **dadurch gekennzeichnet, dass** der Kernbohrer (2) und / oder das Bohrrohr (4) mit einem, insbesondere elektrisch betriebenen Drehantrieb koppelbar ausgebildet sind.

13. Probenehmer nach Anspruch 7, **dadurch gekennzeichnet, dass** der Zentrierring (124) des Kernbohrers (102) wenigstens eine sich vom Umfang radial nach innen erstreckende Ausnehmung (150) und das Bohrrohr (104) an seinem oberen Ende wenigstens einen sich vom Umfang radial nach innen erstreckenden Vorsprung (152) aufweist.

14. Probenehmer nach Anspruch 13, **dadurch gekennzeichnet, dass** der Kernbohrer (102) zwischen Zentrierring (124) und Bohrkopf (122) eine Lochscheibe (127) aufweist.

15. Probenehmer nach einem der Ansprüche 7,13 oder 14, **dadurch gekennzeichnet, dass** das Bohrrohr (104) einen an seiner Außenfläche (125), vorzugsweise klemmend angeordneten, insbesondere daran längs verschiebbaren Abstreiferring (156) aufweist.

16. Probenehmer nach Anspruch 9, **dadurch gekennzeichnet, dass** der Kernbohrer (202) und das Bohrrohr (204) im Bereich ihrer oberen Enden Ausnehmungen (210, 220) zur lösbaren Verbindung mit Nabenelementen (240, 250) der Kurbel (230) aufweisen.

17. Probenehmer nach Anspruch 16, **dadurch gekennzeichnet, dass** die Ausnehmung (210) des Bohrrohrs (204) in Form einer Kulissenbahn (207) eines Bajonettverschlusses ausgebildet ist, in welche wenigstens ein Kurbelarm (235) der Kurbel (230) eingeführt werden kann.

18. Probenehmer nach Anspruch 16 oder 17, **dadurch gekennzeichnet, dass** die Ausnehmung (220) des Kernbohrers (202) als wenigstens eine Bohrung (209) ausgebildet ist, in welche wenigstens ein Federelement (208) des Nabenelements (240) des Kernbohrers (202) eingeführt werden kann.

19. Verfahren zum Probenehmen mit einem Probenehmer nach einem der vorhergehenden Ansprüche, **gekennzeichnet durch** folgende Schritte:
a) Einführen des Kernbohrers (2) in ein zu beprobendes Medium bis zur gewünschten Tiefe durch Eindrücken, Einbohren oder Eintauchen,
b) Überstülpen des Bohrrohrs (4) über den Kernbohrer (2) und Eindrücken, Einbohren oder Eintauchen in das Medium, bis die Bohrkrone (42) mit dem Bohrkopf (22) in Kontakt kommt,
c) gemeinsames Herausziehen des Kernbohrers (2) zusammen mit dem Bohrrohr (4).

20. Verfahren nach Anspruch 19, **gekennzeichnet durch** folgende weitere Schritte:
d) Verbringen des Kernbohrers (2) zusammen mit dem Bohrrohr (4) über einen Auffangbehälter,
e) Abziehen des Bohrrohrs (4) vom Kernbohrer (2).

21. Verfahren zum Probenehmen mit einem Probenehmer nach einem der Ansprüche 7, 13, 14 oder 15, **gekennzeichnet durch** folgende Schritte:
a) Überstülpen des Bohrrohrs (104) über den Kernbohrer (102), bis die Bohrkrone (142) mit dem Bohrkopf (122) in Kontakt kommt, und Eintauchen in das Probemedium bis in eine gewünschte Tiefe,
b) Öffnen der Probekammer des Probenehmers durch Verschieben des Bohrrohrs (104) gegen den Kernbohrer (102),
c) Einströmen lassen einer vorbestimmten Menge des zu beprobenden Mediums,
d) Schließen der Probekammer des Probenehmers durch Verschieben des Bohrrohrs (104) gegen den Kernbohrer (102), bis die Bohrkrone (142) mit dem Bohrkopf (122) in Kontakt kommt,
e) gemeinsames Herausziehen des Kernbohrers (102) zusammen mit dem Bohrrohr (104).

22. Verfahren nach Anspruch 21, **gekennzeichnet durch** folgende weitere Schritte:
f) gemeinsames Verbringen des Kernbohrers (102) zusammen mit dem Bohrrohr (104) über einen Auffangbehälter,
g) Abstützen des Probenehmers mit dem Abstreiferring (156) an einem Probenbehälter,
h) Abziehen des Bohrrohrs (104) gegenüber dem Kernbohrer (102) und Entleeren des Probenehmers.

23. Probenehmer nach Anspruch 1, **dadurch gekennzeichnet, dass** der Kernbohrer (2) und das Bohrrohr (4) voneinander unabhängige Bauteile sind.

## Claims

1. Sampling device (1) which has the following features:
a) a core drill (2) having a drill shaft (21), with a drill head (22) disposed on a first end of the drill shaft (21), with a handle (23) disposed on a second end of the drill shaft (21) and with a centring ring (24) disposed between the two ends of the drill shaft (21) at a predetermined distance to the handle (23), which centring ring has an outer diameter (25),
b) a drill pipe (4) having a drill bit (42) disposed on a first end of the drill pipe (4), with a handle (43) disposed on a second end of the drill pipe (4), wherein the drill pipe (4) has an inner diameter (45) which corresponds to the outer diameter (25) of the centring ring (24),
**characterised in that**
c) the handle (23) of the core drill (2) and the centring ring (24) have the same outer diameters.

2. Sampling device according to claim 1, **characterised in that** the drill head (22) has a drill head tip (26) which tapers, in particular conically, towards the first end.

3. Sampling device according to claim 1 or 2, **characterised in that** the drill head (22) has a rear wall (27) which tapers, in particular conically, towards the second end.

4. Sampling device according to claim 1, 2 or 3, **characterised in that** the drill bit (42) has a chamfer (48) in the form of a cutting edge which tapers towards the inner diameter (45) and is provided in particular with recesses extending radially outwards.

5. Sampling device according to claim 3 or 4, **characterised in that** the tapering rear wall (27) and/or the tapering chamfer (48) is/are oriented at an angle of 45° to the central axis (28) of the drill shaft (21).

6. Sampling device according to one of the preceding claims, **characterised in that** the centring ring (24) and/or the handle (23) of the core drill (2) is/are collar-shaped, spherical or cylindrical.

7. Sampling device according to one of the preceding claims, **characterised in that** the rear wall (27) has a seal (29), in particular an O-ring seal, in the region of its outer edge.

8. Sampling device according to one of the preceding claims, **characterised in that** the drill head (22) and/or the drill pipe (4) comprise drill blades extending radially outwards, in particular screw drill blades, on their outside.

9. Sampling device according to one of the preceding claims, **characterised in that** the core drill (2) and/or the drill pipe (4) comprise receptacles for a crank.

10. Sampling device according to one of the preceding claims, **characterised in that** the drill pipe (4) has at least one level indicator.

11. Sampling device according to one of the preceding claims, **characterised in that** it comprises a device for locking the core drill (2) and the drill pipe (4) against each other.

12. Sampling device according to one of the preceding claims, **characterised in that** the core drill (2) and/or the drill pipe (4) are configured to be connectable to a rotary drive, in particular an electrically driven rotary drive.

13. Sampling device according to claim 7, **characterised in that** the centring ring (124) of the core drill (102) has at least one recess (150) which extends radially inwards from the circumference and the drill pipe (104) has, at its upper end, at least one protrusion (152) which extends radially inwards from the circumference.

14. Sampling device according to claim 13, **characterised in that** the core drill (102) has a perforated disc (127) between the centring ring (124) and the drill head (122).

15. Sampling device according to one of claims 7, 13 or 14, **characterised in that** the drill pipe (104) has a wiper ring (156) disposed on its outer surface (125), preferably in a clamping manner, in particular longitudinally displaceable along said drill pipe.

16. Sampling device according to claim 9, **characterised in that** the core drill (202) and the drill pipe (204) comprise recesses (210, 220) in the region of their upper ends for releasable connection to hub elements (240, 250) of the crank (230).

17. Sampling device according to claim 16, **characterised in that** the recess (210) of the drill pipe (204) is configured in the form of a sliding track (207) of a bayonet mount into which at least one crank arm (235) of the crank (230) can be inserted.

18. Sampling device according to claim 16 or 17, **characterised in that** the recess (220) of the core drill (202) is configured as at least one hole (209) into which at least one spring element (208) of the hub element (240) of the core drill (202) can be inserted.

19. Method for sampling with a sampling device according to one of the preceding claims, **characterised by** the following steps:
a) insertion of the core drill (2) into a medium to be sampled to the desired depth by pushing in, drilling or immersing,
b) putting the drill pipe (4) over the core drill (2) and pushing, drilling or immersing it in the medium until the drill bit (42) comes into contact with the drill head (22),
c) collectively withdrawing the core drill (2) together with the drill pipe (4).

20. Method according to claim 19, **characterised by** the following further steps:
d) moving the core drill (2) together with the drill pipe (4) over a collection container,
e) pulling the drill pipe (4) off the core drill (2).

21. Method for sampling with a sampling device according to one of claims 7, 13, 14 or 15, **characterised by** the following steps:
a) putting the drill pipe (104) over the core drill (102) until the drill bit (142) comes in to contact with the drill head (122) and immersing it in the sampling medium to a desired depth,
b) opening the sample chamber of the sampling device by moving the drill pipe (104) against the core drill (102),
c) allowing a predetermined quantity of the medium to be sampled to flow in,
d) closing the sample chamber of the sampling device by moving the drill pipe (104) against the core drill (102) until the drill bit (142) comes into contact with the drill head (122),
e) collectively withdrawing the core drill (102) together with the drill pipe (104).

22. Method according to claim 21, **characterised by** the following further steps:
f) collectively moving the core drill (102) together with the drill pipe (104) over a collection container,
g) supporting the sampling device with the wiper ring (156) on a sample container,
h) pulling off the drill pipe (104) with respect to the core drill (102) and emptying the sampling device.

23. Sampling device according to claim 1, **characterised in that** the core drill (2) and the drill pipe (4) are independent components.

## Revendications

1. Échantillonneur (1), lequel présente les caractéristiques suivantes :
a) une carotteuse (2) dotée d'une tige de foret (21), dotée d'une tête de foret (22) disposée en une première extrémité de la tige de foret (21), dotée d'une poignée (23) disposée en une seconde extrémité de la tige de foret (21) et dotée d'un anneau ce centrage (24), qui est disposé entre les deux extrémités de la tige de foret (21) à une distance prédéterminée du la poignée (23) et qui possède un diamètre extérieur (25),
b) un tube de forage (4) doté d'une couronne de forage (42) disposée en une première extrémité du tube de forage (4), doté d'une poignée (43) disposée en une seconde extrémité du tube de forage (4), cependant que le tube de forage (4) possède un diamètre intérieur (45), qui correspond au diamètre extérieur (25) de l'anneau de centrage (24),
**caractérisé en ce que**
c) la poignée (23) de la carotteuse (2) et l'anneau de centrage (24) ont le même diamètre extérieur.

2. Échantillonneur selon la revendication n° 1, **caractérisé en ce que** la tête de foret (22) possède une pointe de tête de foret (26), qui présente une forme se rétrécissant dans le sens de la première extrémité, en particulier conique.

3. Échantillonneur selon la revendication n° 1 ou 2, **caractérisé en ce que** la tête de foret (22) présente une face arrière (27) se rétrécissant dans le sens de la seconde extrémité, en particulier conique.

4. Échantillonneur selon la revendication n° 1, 2 ou 3, **caractérisé en ce que** la couronne de forage (42) présente un chanfrein (48), en particulier doté d'évidements qui s'étendent vers l'extérieur dans le sens radial, qui a la forme d'une lame tranchante et qui rétrécit dans le sens du diamètre intérieur (45).

5. Échantillonneur selon la revendication n° 3 ou 4, **caractérisé en ce que** la face arrière (27) se rétrécissant et/ou le chanfrein (48) se rétrécissant est/sont orienté(s) avec un angle α de 45° par rapport à l'axe central (28) de la tige de foret (21).

6. Échantillonneur selon une des revendications précédentes, **caractérisé en ce que** l'anneau de centrage (24) et/ou la poignée (23) de la carotteuse (2) est/sont de forme annulaire, sphérique ou cylindrique.

7. Échantillonneur selon une des revendications précédentes, **caractérisé en ce que** la face arrière (27) dans la zone de son arête extérieure présente une étanchéité (29), en particulier un joint torique.

8. Échantillonneur selon une des revendications précédentes, **caractérisé en ce que** la tête de foret (22) et/ou le tube de forage (4) sur leur face extérieure présentent des pelles de forage qui s'étendent vers l'extérieur dans le sens radial, en particulier en forme de vis.

9. Échantillonneur selon une des revendications précédentes, **caractérisé en ce que** la carotteuse (2) et/ou le tube de forage (4) présentent des évidements pour une manivelle.

10. Échantillonneur selon une des revendications précédentes, **caractérisé en ce que** le tube de forage (4) présente au moins un indicateur de niveau.

11. Échantillonneur selon une des revendications précédentes, **caractérisé en ce qu'**il présente un dispositif de verrouillage de la carotteuse (2) et du tube de forage (4) l'un contre l'autre.

12. Échantillonneur selon une des revendications précédentes, **caractérisé en ce que** la carotteuse (2) et/ou le tube de forage (4) est conçu de façon à pouvoir être branché sur un entraînement rotatif, en particulier à fonctionnement électrique.

13. Échantillonneur selon la revendication n° 7, **caractérisé en ce que** l'anneau de centrage (124) de la carotteuse (102) présente au moins un évidement (150), qui s'étend en direction radiale de la périphérie vers l'intérieur, et le tube de forage (104) présente en son extrémité supérieure au moins une protubérance (152), qui s'étend en direction radiale de la périphérie vers l'intérieur.

14. Échantillonneur selon la revendication n° 13, **caractérisé en ce que** la carotteuse (102) présente un disque perforé (127) entre l'anneau de centrage (124) et la tête de foret (122).

15. Échantillonneur selon une des revendications n^{os} 7, 13 ou 14, **caractérisé en ce que** le tube de forage (104) sur sa surface extérieure (125) présente un anneau racleur (156), qui de préférence est disposé avec serrage et en particulier peut être amené à coulisser en direction longitudinale.

16. Échantillonneur selon la revendication n° 9, **caractérisé en ce que** la carotteuse (202) et le tube de forage (204) dans la zone de leurs extrémités supérieures présentent des évidements (210, 220) pour une connexion amovible avec des éléments du moyeu (240, 250) de la manivelle (230).

17. Échantillonneur selon la revendication n° 16, **caractérisé en ce que** l'évidement (210) du tube de forage (204) présente une forme de coulisse (207) de verrouillage par baïonnette, dans laquelle peut être inséré au moins un bras de manivelle (235) de la manivelle (230).

18. Échantillonneur selon la revendication n° 16 ou 17, **caractérisé en ce que** l'évidement (220) de la carotteuse (202) est conçu avec au moins un alésage (209), dans lequel peut être inséré au moins un élément ressort (208) de l'élément du moyeu (240) de la carotteuse (202).

19. Procédé de prélèvement d'échantillon à l'aide d'un échantillonneur selon une des revendications précédentes, **caractérisé par** les étapes suivantes :
a) Insérer la carotteuse (2) dans un milieu à tester par pression, perçage ou plongée jusqu'à la profondeur souhaitée,
b) Faire glisser le tube de forage (4) par-dessus de la carotteuse (2) et presser, percer ou plonger dans le milieu, jusqu'à ce que la couronne de forage (42) entre en contact avec la tête de foret (22),
c) Retirer la carotteuse (2) conjointement avec le tube de forage (4).

20. Procédé selon la revendication n° 19, **caractérisé par** les étapes supplémentaires suivantes :
d) Amener la carotteuse (2) conjointement avec le tube de forage (4) au-dessus d'un bac de récupération,
e) Retirer le tube de forage (4) de la carotteuse (2).

21. Procédé de prélèvement d'échantillon à l'aide d'un échantillonneur selon une des revendications n° 7, 13, 14 ou 15, **caractérisé par** les étapes suivantes :
a) Faire glisser le tube de forage (104) par-dessus de la carotteuse (102), jusqu'à ce que la couronne de forage (142) entre en contact avec la tête de foret (122), et plonger dans le milieu à tester jusqu'à une profondeur souhaitée,
b) Ouvrir la chambre de prélèvement de l'échantillonneur en faisant coulisser le tube de forage (104) contre la carotteuse (102),
c) Laisser pénétrer une quantité prédéterminée du milieu à tester,
d) Refermer la chambre de prélèvement de l'échantillonneur en faisant coulisser le tube de forage (104) contre la carotteuse (102), jusqu'à ce que la couronne de forage (142) entre en contact avec la tête de foret (122),
e) Retirer la carotteuse (102) conjointement avec le tube de forage (104).

22. Procédé selon la revendication n° 21, **caractérisé par** les étapes supplémentaires suivantes :
f) Amener la carotteuse (102) conjointement avec le tube de forage (104) au-dessus d'un bac de récupération,
g) À l'aide de l'anneau racleur (156), prendre appui sur un récipient à échantillons avec l'échantillonneur,
h) Retirer le tube de forage (104) de la carotteuse (102) et vider l'échantillonneur.

23. Échantillonneur selon la revendication n° 1, **caractérisé en ce que** la carotteuse (2) et le tube de forage (4) sont des éléments indépendants l'un de l'autre.
